# EUROPEAN PATENT APPLICATION

(11) **EP 1 184 627 A1**
(43) Date of publication of application: **06.03.2002**
(21) Application number: 01203299.1
(22) Date of filing: 31.08.2001
(51) Int. Cl.: F24F 7/08, F24F 12/00

(54) **Gas feed-through comprising an indoor heat exchange associated with a heat pump**

(30) Priority: 31.08.2000 NL 1016063
(71) Applicant: GASTEC N.V., NL-7327 AC Apeldoorn (NL)
(72) Inventor: Dijkhof, Willem, 7323 KA Apeldoorn (NL)
(74) Representative: Prins, Adrianus Willem

(57) **Abstract**

A feed-through (1) for discharging exhaust gas through a wall or roof, the feed-through (1) being provided with an outlet (4) and at least one exhaust gas inlet (5) for the supply of the exhaust gas, characterized in that the feed-through (1) is arranged for cooperation with a heat pump (3), in that in the feed-through a heat exchanger (2) of the heat pump (3) is provided downstream of the at least one exhaust gas inlet (5), the feed-through being further provided with a fresh air inlet (6) for supplying fresh air, which inlet opens into the feed-through upstream of the heat exchanger.

## Description

The invention relates to a feed-through for discharging exhaust gas through a wall or roof, the feed-through being provided with an outlet and at least one exhaust gas inlet for supplying the exhaust gas.

Such a feed-through is known per se.

By means of such a feed-through, exhaust gasses coming from a ventilation system and/or a gas consuming appliance are discharged to the outdoor atmosphere.

As a part of energy saving, there is a need to extract heat from gasses. Extraction of heat from gasses can be done with the aid of an evaporator of a heat pump. In a heat exchanger used as an evaporator, a liquid evaporates, which is accompanied by the extraction of heat from the surroundings. The evaporated liquid is transported to a condenser in which the vapor condenses. The heat which is released in this condensation process is transferred via another heat exchanger to a medium to be heated. The heat can, for instance, be extracted from the air present in the surroundings. To achieve a reasonable capacity, the heat exchanger in which evaporation occurs, the evaporator, must have a large heat exchanging surface along which the air can be passed. This leads to the evaporator having large dimensions. For that reason, the evaporator is often placed on roofs. Although in the description only a heat exchanger working on the basis of a liquid/liquid vapor phase change is described, the description also holds for heat exchangers working on the basis of a solid/liquid phase change.

A problem with the evaporator placed on the roof is that from an aesthetic point of view, this position is found unattractive. The aesthetic objections could be circumvented by providing the evaporator in the discharge system of a mechanical ventilation. Unfortunately, it has appeared that the ventilating air to be exhausted does not have sufficient heat to offer the evaporator a sufficiently large capacity. Additionally, it has been considered to install the evaporator indoor and to provide it with a supply, to be especially installed, for fresh air drawn in by a fan, as well as with a discharge, to be especially installed, for returning this fresh air to the outdoor surroundings. A problem is that an extra air supply and/or an extra air discharge opening have to be provided in, for instance, the roof.

The object of the invention is to provide a feed-through which is arranged such that a high capacity can be offered by an evaporator which is installed indoor.

The object mentioned is achieved with the feed-through according to the invention, which is characterized in that the feed-through is arranged for cooperation with a heat pump, in that in the feed-through a heat exchanger of the heat pump is provided downstream of the exhaust gas inlet, the feed-through being further provided with a fresh air inlet for supplying fresh air, which opens upstream of the heat exchanger into the feed-through.

An advantage of such a feed-through according to the invention is that both the exhaust gas and fresh air can flow along the heat exchanger. In this case, sufficient gas can flow along the heat exchanger. The heat exchanger can be installed indoor, while the capacity to be offered is sufficiently large to be justified in terms of costs and from an energetic point of view. An additional advantage is that use can be made of existing supply and/or discharge openings in, for instance, the roof. Therefore, no additional supply and/or discharge openings to and/or from the outside environment need to be installed.

An embodiment of the feed-through according to the invention is characterized in that the feed-through is provided with a fan. This offers the advantage that, if necessary, a larger amount of fresh air can be passed along the heat exchanger.

An embodiment of the feed-through according to the invention is characterized in that the feed-through is further provided with a first and a second temperature sensor for determining a first and a second gas temperature, respectively, the first temperature sensor being provided upstream of the heat exchanger and downstream of the inlet located closest to the heat exchanger, while the second temperature sensor is provided downstream relative to the heat exchanger, while, in use, on the basis of the first and second gas temperature determined with the first and second temperature sensor, the speed of the fan is variable.

This embodiment offers the advantage that, depending on the difference in temperature between the two temperature sensors, which is a measure for the output of the heat exchanger, a larger or smaller amount of gas can be passed through the heat exchanger by regulating the speed of the fan.

A special embodiment of the feed-through according to the invention is characterized in that the feed-through is provided with an at least second exhaust gas inlet.

A still more special embodiment of the feed-through according to the invention is characterized in that the first and/or the second exhaust gas inlet is coupled to a discharge of a ventilation system and/or a gas consuming appliance.

This embodiment offers the advantage that heat can be extracted from both types of exhaust gas, which increases the output of the heat exchanger.

The invention is presently elucidated with reference to a drawing showing a special embodiment of the invention.

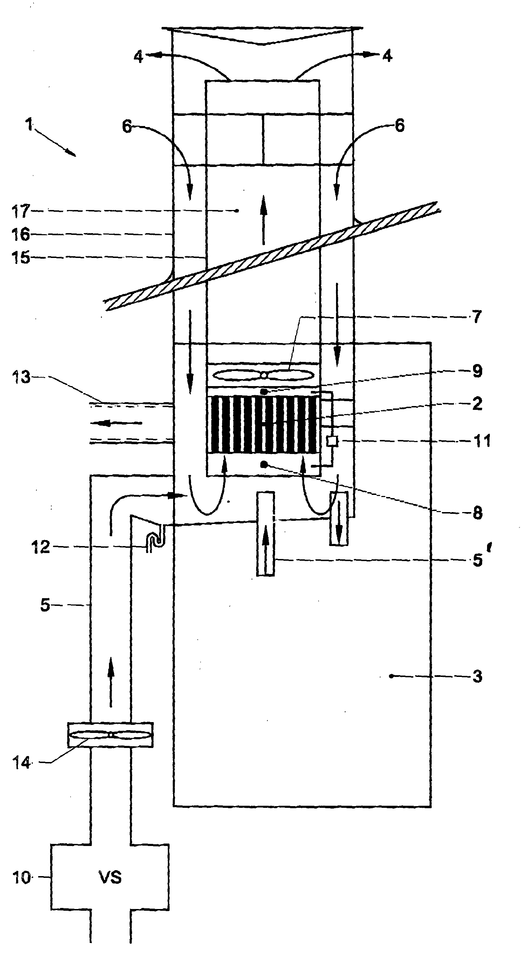

In the drawing there are shown a feed-through 1, for feeding exhaust gas through a wall (not shown) or roof (not shown), and an evaporator 2 associated with a heat pump 3.

The feed-through is provided with an outlet 4 and at least one exhaust gas inlet 5 for supplying the exhaust gas. The heat exchanger 2 of the heat pump 3 is arranged downstream relative to the at least one exhaust gas inlet 5. The feed-through is also provided with a fresh air inlet 6 for supplying fresh air. The fresh air inlet 6 opens into the feed-through 1 upstream of the heat exchanger 2. In the embodiment shown, the feed-through is provided with a fan 7. The speed of the fan 7 is variable. The feed-through 1 is further provided with a first temperature sensor 8 and a second temperature sensor 9 for determining a first and second gas temperature, respectively. The first temperature sensor 8 is provided upstream of the heat exchanger 2 and downstream of the exhaust gas inlet 5 closest to the heat exchanger 2. The second temperature sensor 9 is provided downstream relative to the heat exchanger 2. In use, on the basis of the first and second gas temperature, determined with the aid of the first temperature sensor 8 and the second temperature sensor 9, the speed of the fan 7 is variable. The output of the heat exchanger 2, i.e. the heat extracted per time unit from the gas to be fed through the heat exchanger 2, is determined, inter alia, by the temperature of the gas to be fed through and by the difference in temperature of the gasses present upstream and downstream of the heat exchanger 2. The gas temperatures measured by the first temperature sensor 8 and the second temperature sensor 9, and the temperature difference across the heat exchanger 2 derived therefrom, which is also a measure for the output of the heat exchanger 2, determine the speed of the fan 7. When the difference in temperature increases (for instance, too much), the speed can be increased. At a (for instance too large) decrease of temperature difference, the speed can be increased. The speed can, for instance, be increased when the difference in temperature exceeds a predetermined maximum value, or the speed can be decreased when the difference in temperature drops below a predetermined minimum value.

The feed-through 1 can be provided with several exhaust gas inlets 5. An exhaust gas inlet 5' can be coupled to a discharge of a ventilation system 10. Another exhaust gas inlet 5 can be coupled to a discharge of a gas consuming appliance such as, for instance, a burner of the heat pump 3. By mixing the fresh air with the heated ventilating air of the dwelling, the temperature of the gas to be fed through the heat exchanger 2 increases. When the heat pump 3 is in operation, also the hot exhaust gasses of the heat pump are supplied to a gas to be fed through the heat exchanger 2. Then, the temperature of the gas to be fed through the heat exchanger 2 increases still more. Accordingly, the output of the heat exchanger 2 will increase.

In the special embodiment shown, the feed-through 1 is provided with a pressure drop sensor 11 for determining a difference in the gas pressure between gas present upstream and downstream of the heat exchanger 2. The pressure drop sensor 11 is designed such that, on the basis of the difference in gas pressure, the speed of the fan 7 is variable. When white frost occurs on the heat exchanger 2, the flow resistance of the heat exchanger 2 will increase. If the pressure difference indicates or exceeds a predetermined, impermissible value, which means that the flow resistance of the heat exchanger 2 is very high, the speed of the fan 7 is variable such, that less gas is fed through the heat exchanger 2. Then, the speed is decreased. This means that less fresh air and, therefore, relatively more exhaust gas comprising exhaust gasses of a gas consuming appliance and/or exhaust gas coming from a ventilation system 10, will flow through the heat exchanger 2. The exhaust gasses have a higher temperature than the fresh air. As a result, the white frost will melt. Further, the feed-through 1 can be provided with a discharge 12 for water of condensation and rain water. The discharge 12 is located at a position in the system such, that water of condensation and rain water can be discharged under the influence of gravity. In a special embodiment of the invention, the feed-through is provided with at least one branch 13 for feeding through fresh air to an air intake system. The at least one branch 13 is provided downstream relative to the fresh air inlet 6 for supply of fresh air and upstream relative to at least exhaust gas inlet 5 for the supply of exhaust gas. The air intake system (not shown) can comprise a gas burning device and/or a ventilation system 10 with or without a Heat Recovery Unit. An exhaust gas inlet can also be provided with an exhaust gas inlet fan 14. With the aid of the exhaust inlet fan 14, for instance, ventilating air of the dwelling can be discharged into the exhaust gas inlet 5. Then, the supply of the air 6 is a balancing figure corresponding to the difference of the flow rate of the gasses flowing from the outlet 4 and the flow rate of the exhaust gas flowing into the exhaust gas inlet 5. These flow rates can be adjusted with the fan 7 and the fan 14, respectively.

Many variants, adjustments and extensions of the system are possible. The part of the feed-through 1 located upstream relative to the heat exchanger 2 and the part of the feed-through 1 located downstream relative to the heat exchanger 2 can be designed to be in a parallel orientation relative to each other. In a very special embodiment, as is also shown in the drawing, the feed-through 1 is provided with an inner tube 15 and an outer tube 16, arranged around the inner tube 15. The ring-shaped channel bounded by the inner tube 15 and the outer tube 16 at least partly defines the fresh air inlet 6. The inner tube 15 bounds a feed-through channel 17, opening into the outlet 4. The fresh air inlet 6 and the outlet 4 can be designed such that with wind present in the outside surroundings, a pressure is created in the part located downstream relative to the heat exchanger 2, which pressure is lower than the pressure in the part located upstream relative to the heat exchanger 2. In this case, on the basis of the difference in temperature across the heat exchanger 2, determined with the aid of the temperature sensor 8, 9, the speed of the fan 7 will be decreased. Thus, the energy consumption of the fan decreases and the output of the heat exchanger 2 increases.

As stated earlier, the invention is not limited to the heat exchanger shown but can also be used with heat exchangers working on the basis of a solid/liquid phase change.

Such variants are each considered to fall within the scope of the invention.

## Claims

1. A feed-through for discharging exhaust gas through a wall or roof, the feed-through being provided with an outlet and at least one exhaust gas inlet for supplying the exhaust gas, **characterized in that** the feed-through is arranged for cooperation with a heat pump, **in that** in the feed-through a heat exchanger of the heat pump is provided downstream of the at least one exhaust gas inlet, the feed-through being further provided with a fresh air inlet for supplying fresh air, which opens into the feed-through upstream of the heat exchanger.

2. A feed-through according to claim 1, **characterized in that** the feed-through is provided with a fan.

3. A feed-through according to claim 2, **characterized in that** the fan is located downstream of the heat exchanger.

4. A feed-through according to claim 2 or 3, **characterized in that** the fan is provided with a speed regulation.

5. A feed-through according to claim 4, **characterized in that** the feed-through is further provided with a first and a second temperature sensor for determining a first and a second gas temperature, respectively, the first temperature sensor being provided upstream of the heat exchanger and downstream of the exhaust gas inlet located closest to the heat exchanger, the second temperature sensor being provided downstream relative to the heat exchanger, while, in use, on the basis of the first and the second gas temperature determined with the aid of the first and second temperature sensor, the speed of the fan is variable.

6. A feed-through according to claim 5, **characterized in that** the feed-through is arranged to vary the speed of the motor on the basis of the difference in temperature between the first and the second gas temperature.

7. A feed-through according to any one of claims 4 - 6, **characterized in that** the feed-through is provided with a pressure drop sensor for determining a difference between the gas pressure in gasses present upstream and downstream of the heat exchanger, the pressure drop sensor being connected to the speed regulator of the fan, such that, on the basis of the difference in gas pressure, the speed of the fan is variable.

8. A feed-through according to claim 7, **characterized in that** the feed-through is arranged to reduce the speed of the fan if the difference in gas pressure exceeds a predetermined value.

9. A feed-through according to any one of claims 1 - 8, **characterized in that** the feed-through is provided with an at least second exhaust gas inlet.

10. A feed-through according to claim 9, **characterized in that** the first and/or second exhaust gas inlet is coupled to a discharge of a ventilation system and/or a gas consuming appliance.

11. A feed-through according to claim 10, **characterized in that** the gas consuming appliance comprises the heat pump.

12. A feed-through according to any one of the preceding claims, **characterized in that** the feed-through is provided with a discharge for water of condensation and rain water, which is situated in a position in the system such that the water of condensation and rain water can be discharged under the influence of gravity.

13. A feed-through according to any one of the preceding claims, **characterized in that** the feed-through is provided with at least one branch for feeding through fresh air to an air intake system, the at least one branch being provided downstream relative to the fresh air inlet for supplying fresh air and upstream relative to the at least one exhaust gas inlet for supplying the exhaust gas.

14. A feed-through according to claim 12, **characterized in that** the air intake system comprises a gasburning device and/or a ventilation system with or without a Heat Recovery Unit.

15. A feed-through according to any one of the preceding claims, **characterized in that** the at least one inlet is also provided with an exhaust gas inlet fan.

16. A feed-through according to any one of the preceding claims, **characterized in that** the feed-through is designed to be orientated substantially parallel to the fresh air supply inlet.

17. A feed-through according to any one of the preceding claims, **characterized in that** the feed-through comprises an inner tube and an outer tube provided about the inner tube, wherein a ring-shaped channel bounded by the inner tube and the outer tube determines at least partly the fresh air inlet, while the inner tube bounds a feed-through channel opening into the outlet.

18. A feed-through according to any one of the preceding claims, **characterized in that** the fresh air inlet and the outlet are designed such that, with a wind present in the outside surroundings, a pressure in the part of the feed-through downstream relative to the heat exchanger is lower than the pressure in the part of the feed-through upstream relative to the heat exchanger.

19. A feed-through according to any one of the preceding claims, **characterized in that** the heat pump is integrated with the feed-through.
